# EUROPÄISCHE PATENTSCHRIFT

(11) **EP 1 529 657 B1**
(45) Veröffentlichungstag und Bekanntmachung des Hinweises auf die Patenterteilung: **16.08.2006**
(21) Anmeldenummer: 04025986.3
(22) Anmeldetag: 02.11.2004
(51) Int. Cl.: B60C 9/02, B60C 19/00

(54) **Adaptiver Fahrzeugreifen, der Nanostrukturteilchen aufweist**
Adaptive pneumatic tire comprising nano structures
Pneumatique adapaté comprendre des nanostructures

(30) Priorität: 06.11.2003 DE 10352339
(43) Veröffentlichungstag der Anmeldung: 11.05.2005
(73) Patentinhaber: DaimlerChrysler AG, 70567 Stuttgart (DE)
(72) Erfinder: König, Ulf, 89075 Ulm (DE); König, Lars, 70176 Stuttgart (DE)

(56) Entgegenhaltungen:
- US-A- 5 411 070
- YONG K. KIM: "Nanocomposite Fibers" NATIONAL TEXTILE CENTER ANNUAL REPORT M00-D08, [Online] November 2000 (2000-11), XP002315786 Gefunden im Internet: URL:http://www.ntcresearch.org/pdf-rpts/An Rp00/m00-d08.pdf> [gefunden am 2005-01-31]

## Beschreibung

Die Erfindung betrifft Fahrzeugreifen, die hinsichtlich ihrer mechanischen Eigenschaften ein adaptives, d. h. wählbares Verhalten zeigen.
Ein solches Verhalten ist für Fahrzeugreifen aus den unterschiedlichsten Gründen wünschenswert. So ändern sich beispielsweise die Anforderungen an die Bereifung eines Fahrzeuges stark, sobald sich die Zuladung eines Fahrzeuges ändert. Dieser Problematik wird üblicherweise dadurch begegnet, dass der Reifendruck entsprechend angepasst wird. Ebenso ist es insbesondere für die Bereifung von Geländefahrzeugen erforderlich, die mechanischen Eigenschaften der Reifen an die momentan herrschenden Umgebungsbedingungen anzupassen.
Um den oben geschilderten Anforderungen gerecht zu werden, wird in der deutschen Patentanmeldung DE 100 01 348 A1 eine elektromechanische Reifendruckregelanlage vorgeschlagen, die im Fahrzeugrad angeordnet ist und die eine Kontrolle und Anpassung der Reifendrücke während der Fahrt gewährleistet. Der damit verbundene apparative Aufwand ist jedoch beachtlich: so wird in der vorgeschlagenen Lösung eine elektrische Pumpe verwendet, deren Stromversorgung über einen ebenfalls zusätzlich vorzusehenden in das Rad integrierten Generator erfolgt. Diese Ausgestaltung macht das vorgeschlagene System schwer, fehleranfällig, komplex und teuer.

Aus der US-Patentanmeldung US 5,411,070 A1 ist ein gattungsgemäßes Fahrzeugreifen mit wählbaren mechanischen Eigenschaften bekannt. Dieser Fahrzeugreifen ist mit einem oder mehreren Aktuatoren zur Änderung der physikalischen Eigenschaften des Fahrzeugreifens versehen.

Weiterhin ist aus YONG, K. KIM: "Nanocomposite Fibers" NATIONAL TEXTILE CENTER ANNUAL REPORT M00-D08, (Online) November 2000 (2000-11), XP002315786 die Verwendung von Nanotubes zur Verstärkung von Reifen bekannt.

Es ist Aufgabe der vorliegenden Erfindung, einen Fahrzeugreifen anzugeben, der flexibel an die jeweilige Fahrsituation anpassbar ist und den oben genannten Nachteilen wirksam begegnet.

Diese Aufgabe wird durch einen Fahrzeugreifen mit den im Anspruch 1 angegebenen Merkmalen gelöst. Vorteilhafte Weiterbildungen der Erfindung sind Gegenstand der Unteransprüche.

Die erfindungsgemäße Lösung besteht im wesentlichen darin, dass der Fahrzeugreifen mit Aktuatoren versehen ist. Dabei kann es sich bei den Aktuatoren um verschiedene Strukturen handeln, deren physikalische, insbesondere mechanische Eigenschaften auf Grund äußerer Einflüsse änderbar sind. Hierdurch wird die Möglichkeit geschaffen, die physikalischen/mechanischen Eigenschaften des Fahrzeugrades als Gesamtsystem allein durch die Änderung der physikalisch/mechanischen Eigenschaften des Reifens zu erreichen. Dabei können verschiedene Reifenparameter wie beispielsweise Querschnitt, Elastizität oder die Form der Lauffläche an die jeweilige Fahrsituation wie beispielsweise Schnellfahrt, Beschleunigung, Abbremsung, Kurvenfahrt bzw. an den jeweiligen Straßenzustand (trocken, Wasser, Schnee) oder an die Fahrbahnbeschaffenheit angepasst werden.

Eine vorteilhafte Wahl der Klasse von Materialien für die Realisation der Aktuatorfunktionalität sind Folien aus Shape-Memory Materialien aus speziellen Legierungen (z. B. NiTi). Zwei derartige mikro-/nano-dünne Folien übereinandergeschichtet ermöglichen bei unterschiedlicher Spannungsbelegung an ihnen eine Kontraktion, bsw. ein reversibles Zurückschnappen in die ursprüngliche Größe. Durch Stapelung einer Vielzahl solcher Doppelfolien addieren sich die Längenänderungen und Kräfte. Aktuatoren aus derartigen Folien sind beispielsweise bei www.robotstore.com kommerziell erhältlich.

Ebenso können die Aktuatoren aus Nanostrukturteilchen bestehen oder aus ihnen gebildet sein, vorzugsweise aus Kohlenstoff-Nanostrukturteilchen. Diese zeigen eine Reihe von herausragenden chemischen und mechanischen Eigenschaften. Bekannte Vertreter der Kohlenstoff-Nanostrukturteilchen sind die sogenannten Fullerene, "fußballartige" Moleküle aus 60 Kohlenstoffatomen.
Derartige Kohlenstoff-Nanostrukturteilchen weisen diamantartige mechanische Stabilität bei einem Bruchteil der Dichte von Stahl auf; damit sind sie für die Anwendung in mechanischen Bauteilen insbesondere auch im Hinblick auf Leichtbauanwendungen besonders geeignet. Darüber hinaus haben Kohlenstoff-Nanostrukturteilchen die besondere Eigenschaft, bei Aufnahme oder Abgabe elektrischer Ladungen ihre räumlichen Abmessungen zu ändern. Dieses Verhalten eröffnet die Möglichkeit, die genannten Nanostrukturteilchen als Bestandteile von mechanischen Aktuatoren in vorteilhafter Weise anzuwenden.

Eine für Aktuatoren besonders geeignete Klasse der Nanostrukturteilchen stellen Fasern dar, langgestreckte Riesenmoleküle beispielsweise aus Kohlenstoffatomen.
Die Fasern bzw. Folien, die auch aus anderen Materialien wie beispielsweise Silikaten oder Metallen bestehen können, können einfach in eine Materialstruktur integriert werden und bewirken aufgrund der Addition der einzelnen Längenänderungen beispielsweise beim Anlegen einer elektrischen Spannung eine makroskopisch messbare Längenänderung. Auf diese Weise wird es möglich, beispielsweise eine gewünschte Formänderung eines Fahrzeugreifens allein durch das Anlegen einer elektrischen Spannung an den Reifen zu bewirken. Sobald die elektrische Spannung nicht mehr anliegt, kehrt der Reifen in seine ursprüngliche Form zurück; der geschilderte Vorgang ist also reversibel.

Bei den Fasern kann es sich in einer bevorzugten Ausgestaltung der Erfindung mindestens teilweise um Nanotubes mit einem Durchmesser von ca. 0,4 bis 30 nm handeln. In den Nanotubes sind die Kohlenstoffatome in einem regelmäßigen Verbund von sechseckigen Ringen (hexagonale Atomgitterstruktur) als Röhre angeordnet.
Diese Anordnung entspricht einer aufgerollten Schicht Graphit, jedoch ist sie hinsichtlich ihrer mechanischen Eigenschaften Graphit weit überlegen. Aufgrund der stabilen Kohlenstoffkonfiguration im Röhrenverbund besitzen Nanotubes extreme Härte und Reißfestigkeit.
Auch die Strom- und Wärmeleitfähigkeit der Nanotubes ist außergewöhnlich - Stromdichten bis zu 1000 Ampere pro Quadratzentimeter können erreicht werden, ohne dass das Material zu schmelzen beginnt. Die extrem hohe Wärmeleitfähigkeit (doppelt so hoch wie die des Diamant) trägt in vorteilhafter Weise zu einer schnellen und gleichmäßen Wärmeverteilung im Material bei und unterbindet so wirksam das Auftreten thermisch induzierter mechanischer Spannungen.
Nanotubes als Aktuatormaterial werden bspw. in der Publikation S. Roth and R.H. Baughman "Actuators of Individual Carbon Nanotubes" (Current Applied Physics 2, 311-314 (2002)) diskutiert.

Eine für die Verwendung in dem erfindungsgemäßen Fahrzeugreifen weiterhin interessante Variante der Nanotubes stellen die sogenannten Multi-Wall-Bucky-Fibers dar. Sie bestehen aus mehreren konzentrisch ineinander geschachtelten Nanotubes. Diese Struktur erlaubt es, beispielsweise Ionen direkt zwischen die Zylinderwände der Multi-Wall-Bucky-Fibers einzulagern; im elektrischen Feld wandern die Ionen und erzeugen auf diese Weise die Längenänderung der Multi-Wall-Bucky-Fiber und damit des umgebenden Materials.

Die direkte Integration der Aktuatoren in das Material des Fahrzeugreifens stellt eine interessante Möglichkeit zur Verwirklichung des erfindungsgemäßen Fahrzeugreifens dar. Dabei können beispielsweise die Nanofasern bereits bei der Herstellung in das elastische Matrixmaterial des Reifens eingebracht werden.
Die Reifenwandung kann dabei in eine Vielzahl von Aktuatorsegmenten aufgeteilt sein, die teilweise aus Nanotubes, die vorzugsweise eine Biegeverformung des Reifenwandsegmentes bewirken, und teilweise aus Nanofolien, die eine Dehnung des Reifenwandsegmentes bewirken. Durch geeignete Verteilung des einen oder anderen Aktuatortyps entlang der Reifenwandungen bei der Reifenherstellung kann den angestrebten Verformungen des Reifens Rechnung getragen werden.
Bei der Integration der erfindungsgemäßen Aktuatoren in das Material des Fahrzeugreifens kommt ein weiterer Vorteil insbesondere der Verwendung von Kohlenstoff-Nanostrukturteilchen zum Tragen: Einerseits tragen die verwendeten Kohlenstoff-Nanostrukturteilchen durch ihre überragenden mechanischen Eigenschaften zur Stabilisierung des erfindungsgemäßen Fahrzeugreifens bei. Hierdurch sinken die Anforderungen an die mechanischen Eigenschaften des verwendeten Reifenmaterials, so dass sich die Zahl derjenigen Materialien, die zur Verwendung in einem derartigen Fahrzeugreifen geeignet sind, deutlich erhöht.
Dies führt dazu, dass beispielsweise auch Materialien verwendet werden können, die auf Grund ihrer mechanischen Eigenschaften ohne die zusätzliche Verwendung von Kohlenstoff-Nanostrukturteilchen für die Verwendung in konventionellen Fahrzeugreifen zunächst nicht in Frage kommen würden. Durch die Integration der beschriebenen Aktuatoren lassen sich die Eigenschaften des so entstehenden Verbundmaterials in vorteilhafter Weise im Hinblick auf die Verwendung als Reifenmaterial optimieren.
Darüber hinaus gestattet es das geringe Gewicht der verwendeten Nanostrukturteilchen, Leichtbauanforderungen weitestgehend gerecht zu werden.

Eine Alternative zu der vorgenannten Möglichkeit der Integration der Aktuatoren besteht darin, dass die Aktuatoren in ein vom Material des Fahrzeugreifens verschiedenes Material integriert sind. Bei diesem Material kann es sich beispielsweise um eine an das Material des Reifens adaptierte Gummimischung oder um einen Kunststoff handeln, der mit dem Material des Reifens eine stabile mechanische Verbindung eingeht. Diese Variante bietet den besonderen Vorteil, dass die Wahl des Materials unter dem Gesichtspunkt getroffen werden kann, wie groß die Ionendichte und die Beweglichkeit der Ionen in dem betreffenden Material ist. Diese Parameter spielen für die Funktionalität insbesondere der Kohlenstoff-Nanostrukturteilchen als Aktuatoren eine wesentliche Rolle. Darüber hinaus sind die Restriktionen hinsichtlich der mechanischen Eigenschaften des verwendeten Materials wie beispielsweise der Abriebfestigkeit in dieser Ausführungsform der Erfindung von untergeordneter Bedeutung, weil sich das Material, in das die Aktuatoren eingebettet sind, im inneren des Reifens befindet und damit geringeren mechanischen Belastungen ausgesetzt ist. Ferner gestattet es diese Variante, fertig konfektionierte Aktuatorstrukturen in hoher Auflage vorzubereiten und in der Art eines Schlauches in den Reifen einzufügen, was sich insbesondere vorteilhaft auf die Preisgestaltung des erfindungsgemäßen Fahrzeugreifens auswirkt.

Vorzugsweise sind die Aktuatoren schichtweise in einer Lamellenstruktur angeordet. Zur Realisation dieser Variante der Erfindung werden die Nanostrukturteilchen, die z. B. in der Form von Nanotubes vorliegen können, in zwei im wesentlichen parallelen Schichten angeordnet, die durch beispielsweise eine zwischen den beiden Schichten angeordnete Polymerschicht voneinander getrennt sind. Dabei können die beiden äußeren Schichten, die die Kohlenstoff-Nanostrukturteilchen aufweisen, jeweils elektrisch kontaktiert werden. Die so entstandenen Lamellen können dann nebeneinander parallel zur Ausrichtung der Einzelschichten und/oder auch hintereinander angeordnet zu einzelnen Segmenten kombiniert werden. Der Vorteil dieser Anordung besteht darin, dass sich einerseits die Längenänderungen der hintereinander angeordneten Lamellen und andererseits die ausgeübten Kräfte der nebeneinander angeordneten Lamellen addieren. Darüber hinaus gestattet diese modulare Realisation eine einfache und kostengünstige Herstellung der erfindungsgemäßen Aktuatorstrukturen. Als kleinste Einheit können die Lamellen oder auch die aus ihnen gebildeten Segmente identisch in großer Auflage hergestellt werden. Die konkrete Ausgestaltung der für die jeweilige Anwendung benötigten Bauform erfolgt dann durch die Integration der Einzellamellen bzw. der Einzelsegmente. Auf diese Weise wird es möglich, mit geringem Aufwand eine flexible Möglichkeit zur Realisation unterschiedlicher erfindungsgemäßer Fahrzeugreifen zu schaffen. Ferner bietet diese Variante der Erfindung die Möglichkeit, die Dicke der verwendeten Lamellen an die jeweiligen Anforderungen anzupassen, also insbesondere an Stellen, wo die Aufbringung größerer Kräfte erforderlich ist, Lamellen großer Dicke zu verwenden.

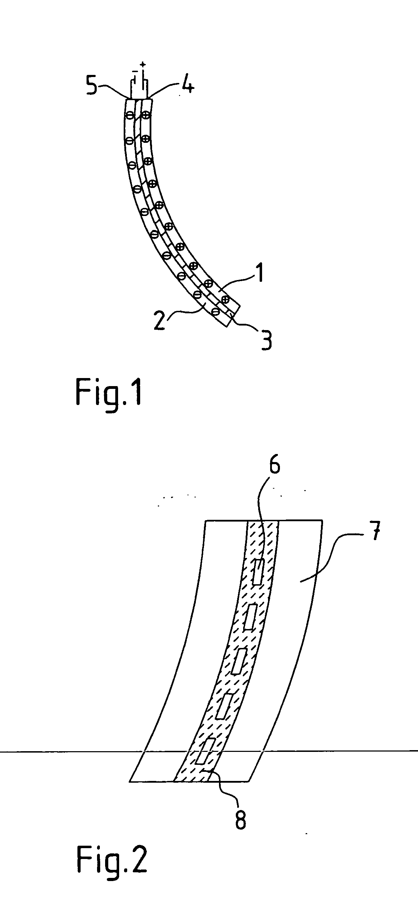

Anhand der schematischen Darstellung in Figur 1 wird im folgenden der Aufbau einer Lamelle, wie sie beispielsweise zur Realisation einer erfindungsgemäßen Aktuatorstruktur verwendet werden kann, erläutert. Die Lamelle zeigt eine erste Schicht 1 mit Nanofaserbündeln und eine zweite Schicht 2, die im wesentlichen parallel zur ersten Schicht 1 verläuft und ebenfalls Nanofaserbündel aufweist. Dabei bestehen die beiden Schichten 1 und 2 aus einem Polymer, in das die Nanofaserbündel eingebettet sind. Die Nanofasern können dabei auch ungeordnet in einer filzartigen, gepressten Struktur angeordnet sein. Zwischen den beiden Schichten 1 und 2 verläuft eine elektrische isolierende Schicht 3. Die beiden Schichten 1 und 2 weisen die elektrischen Anschlüsse 4 und 5 auf, die mit einer Gleichspannungsquelle verbunden sind. Beim Anlegen einer elektrischen Gleichspannung an die beiden Schichten 1 und 2 wie in der Figur gezeigt nehmen die Nanofaserbündel in einer Schicht Ladungsträger bzw. Ionen auf. Da mit der Aufnahme bzw. der Abgabe von Ladungsträgern eine Ausdehnung bzw. Kontraktion der beteiligten Nanofaserbündel verbunden ist, zeigt die Lamelle im Ergebnis bei Anlegen einer Spannung eine Biegung.

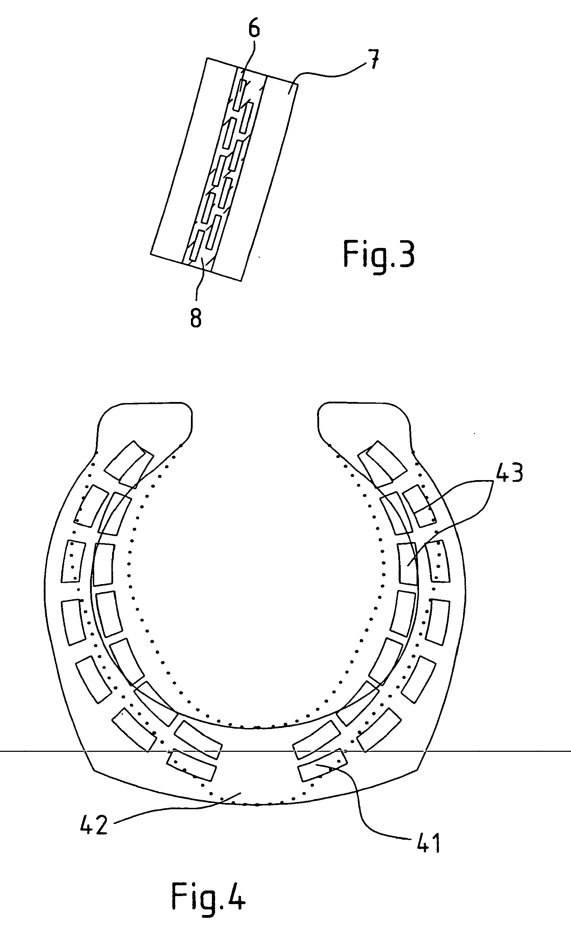

Beispielhafte Möglichkeiten zur Integration der beschriebenen Lamellen in das Material des Fahrzeugreifens sind in den nachfolgenden Figuren 2 und 3 aufgezeigt.
Fig. 2 zeigt eine einlagige Realisation der Integration der Lamellen in das Reifenmaterial, wobei die Ausrichtung der einzelnen Lamellen an die Reifenform angepasst ist. Dabei können die Lamellen in eine zusätzliche Schicht aus einem vom Reifenmaterial verschiedenen Material eingebettet sein.
In Fig. 3 ist eine mehrlagige Konfiguration der Lamellen dargestellt, wobei die Lamellen teilüberlappend angeordnet sind. Auf diese Weise lassen sich die Lamellen in der Weise anordnen, dass die Anzahl der Lagen in den Bereichen des Reifens, in denen erhöhte Kräfte auftreten beziehungsweise erforderlich sind, entsprechend angepasst wird. Dies kann insbesondere im Bereich des Wulstes und der Lauffläche erforderlich sein.

Dabei ist es nicht unbedingt notwendig, dass die Lamellen in einer zusätzlichen Schicht integriert sind; es kann auch von Vorteil sein, die Lamellen direkt in das Material der Decke oder der Karkasse des Reifens zu integrieren. Zur Ansteuerung der Aktuatoren sind elektrische Verbindungselemente im Reifen notwendig. Beispielsweise können die Aktuatoren durch in den Reifen eingebrachte Metallbahnen oder - netze elektrisch kontaktiert werden. Bereits in konventionellen Fahrzeugreifen sind z. B. Stahlgürtel im Bereich der Lauffläche integriert. Diese bereits vorhandenen Stahlgürtel können in vorteilhafter Weise als Leiterbahnen zur Kontaktierung der Aktuatoren verwendet werden.

Eine besonders vorteilhafte Ausgestaltung der Erfindung besteht darin, dass die Form des Fahrzeugreifens wählbar ist. Im Alltagsbetrieb sind Fahrzeugreifen jeweils abhängig von der aktuellen Fahrsituation unterschiedlichsten Anforderungen ausgesetzt. Für eine Geradeausfahrt bei hoher Geschwindigkeit ist es beispielsweise vorteilhaft, die Lauffläche des Reifens, d. h. die Fläche, die mit der Fahrbahnoberfläche unmittelbar in Kontakt steht, zu verringern. Auf diese Weise wird ein verbessertes Abrollverhalten des Reifens erreicht, die Reibung wirksam vermindert und damit der Kraftstoffverbrauch reduziert. Figur 4 zeigt einen erfindungsgemäßen Fahrzeugereifen, bei dem der Reifenquerschnitt auf schnelle Geradeausfahrt angepasst wurde (gepunktet). Die Änderung des Querschnitts wird dadurch erreicht, dass die Lamellen 41 in der Nähe der Lauffläche 42 eine Streckung zeigen und die Lamellen 43 nahe dem Wulstbereich eine Biegung ausüben.

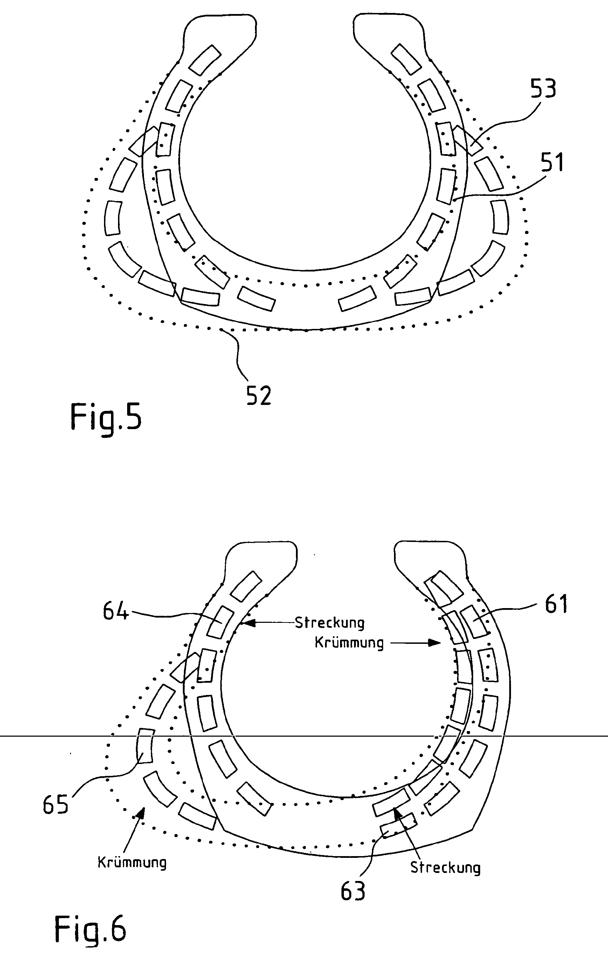

Im Unterschied hierzu ist es beispielsweise in Kurven oder bei Bremsmanövern oder auch bei schneeglatter Fahrbahn notwendig, die Auflagefläche des Reifens zu erhöhen, um dem Fahrzeug die notwendige Stabilität zu verleihen. In Figur 5 ist der korrespondierende Reifenquerschnitt dargestellt.

Durch die Biegung der Lamellen 51 nahe der Lauffläche 52 und die gleichzeitige Streckung der Lamellen 53 im Wulstbereich wird der gewünschte Reifenquerschnitt erreicht.

Insbesondere bei Kurvenfahrten ist es von Vorteil, mittels dem erfindungsgemäßen Fahrzeugreifen dem durch die auftretenden Querkräfte verursachten sogenannten Walken (seitliche Defomation des Reifens) entgegenzuwirken. Dies kann in vorteilhafter Weise durch eine geeignete elektrische Ansteuerung der Aktuatoren erreicht werden, d. h. die Aktuatoren wirken den aus der Kurvenfahrt resultierenden Querkräften, die zu einer Scherung des Reifenmaterials führen, entgegen und unterbinden auf diese Weise das Walken. Dies führt im Ergebnis zu einer geringeren Erwärmung des Reifens und damit zu einem verminderten Abrieb, was sich vorteilhaft auf die Lebensdauer des Fahrzeugreifens auswirkt. Figur 6 zeigt den unter Verwendung der Aktuatoren gebildeten Reifenquerschnitt für diese Fahrsituation. Durch die Krümmung der Lamellen 61 und 65 bei gleichzeitiger Streckung der Lamellen 64 und 63 nimmt der Fahrzeugreifen die gewünschte Form an.

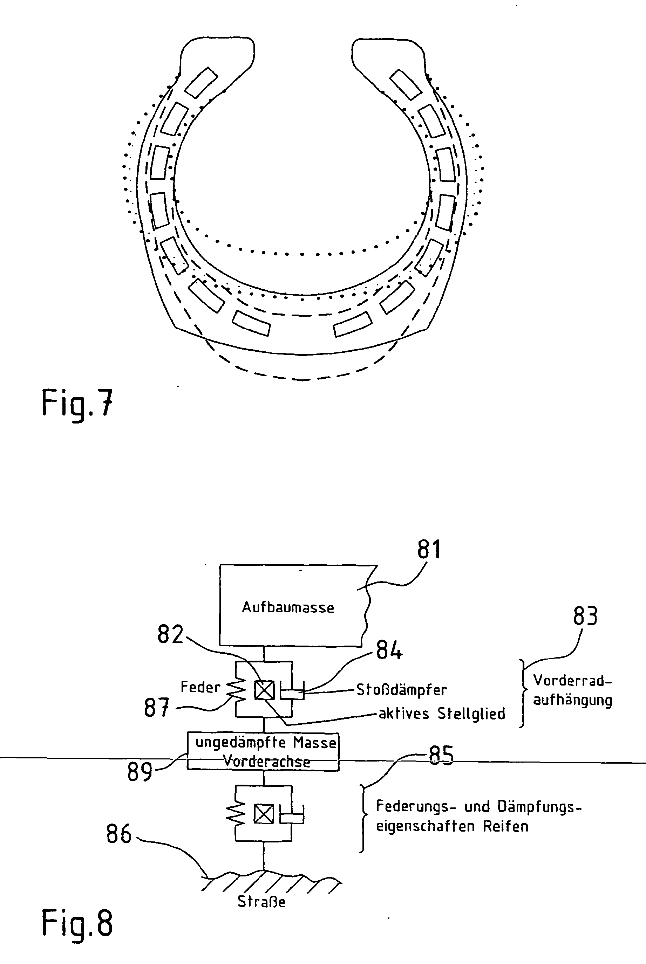

In ähnlicher Weise kann die Elastizität des Fahrzeugreifens wählbar gestaltet werden. Beispielsweise kann es durch die Aktuatoren erreicht werden, dass der Fahrzeugreifen im Falle einer erhöhten Zuladung härter eingestellt wird oder Straßenunebenheiten abfedert. Dies wird bei konventionellen Fahrzeugreifen bislang über eine Erhöhung des Luftdrucks erreicht, was einen gewissen Aufwand erfordert. Ebenso hängt die Elastizität konventioneller Fahrzeugreifen in hobem Maße von der Außentemperatur bzw. der Reifentemperatur ab. Die Erfindung bietet hier eine einfache Lösung zur optimalen Wahl der Elastizität des Reifens für die jeweils herrschenden Bedingungen. Ferner kann die beschriebene Funktionalität dazu verwendet werden, im Falle eines Druckverlustes im Reifen Notlaufeigenschaften durch eine entsprechende Versteifung des Reifens unter Verwendung der Aktuatoren zu realisieren. Darüber hinaus kann die adaptive Reifenverformung zur Dämpfung der Vertikalschwingungen bei unebener Straßenoberfläche genutzt werden. Diese Anwendung des erfindungsgemäßen Fahrzeugreifens ist in Fig. 7 illustriert. Als aktiver Bestandteil des Fahrwerks kann der Fahrzeugreifen in Schwingungen zwischen den beiden gepunktet und gestrichelt dargestellten maximalen Auslenkungen versetzt werden. Dies führt bei geeigneter Ansteuerung der Aktuatoren zu einer wirksamen Dämpfung der oben genannten Vertikalschwingungen und damit einem deutlich erhöhten Fahrkomfort.

Besonders vorteilhaft ist es, die Aktuatoren mit einer Steuereinheit zu verbinden, die die Aktuatoren anhand von Sensordaten oder Benutzereingaben ansteuert. Dabei kann die Steuereiheit in den Reifen integriert sein oder sich außerhalb des Reifens befinden. Die Sensordaten können von unterschiedlichsten Sensoren gewonnen werden. Beispielsweise können Sensoren direkt in das Reifenmaterial integriert werden. Dabei kann es sich beispielsweise um Sensoren auf Basis des Piezoeffektes handeln, die besonders geeignet sind, Verformungen wie beispielsweise Dehnungen oder Stauchungen im Reifenmaterial zu sensieren. Auch optische Fasersensoren können aufgrund ihrer guten Integrierbarkeit in Verbundmaterialien für die genannte Anwendung verwendet werden. Auf Basis der gemessenen Werte legt die Steuereinrichtung fest, welche Spannung in welchem Bereich des Fahrzeugreifen an die Aktuatoren angelegt wird und optimiert auf diese Weise dynamisch das mechanische Verhalten des Fahrzeugreifens. Ebenso können Sensordaten verwendet werden, die von ohnehin bereits im Fahrzeug vorhandenen Sensoren gewonnen werden wie beispielsweise von Geschwindigkeitssensoren oder Gierratensensoren. Die Auswertung der Sensordaten und die dadurch mögliche dynamische Steuerung der Eigenschaften des erfindungsgemäßen Fahrzeugreifens schafft auf diese Weise die einzigartige Möglichkeit, die letzte passive Komponente des Fahrwerkes, nämlich den Reifen, zu einer aktiv steuerbaren funktionalen Einheit im System des Fahrwerkes weiterzuentwickeln.
Das so entstehende vollständig aktive Fahrwerk soll im folgenden anhand der schematischen Darstellung der Figur 8 verdeutlicht werden. Die Aufbaumasse 81, d. h. das Fahrzeug selbst, steht hier über das Feder-Dämpfer-System eines aktiven Fahrwerks und den Reifen mit der Straßenoberfläche 86 in Kontakt. Dabei zeigt das aktive Fahrwerk eine Feder 87, einen Stoßdämpfer 84 sowie ein aktives Stellglied 82, die mit der ungedämpften Masse der Vorderachse 87 verbunden sind. Bei der Verwendung konventioneller Fahrzeugreifen stellen diese Reifen nur passive Feder-Dämpfersysteme ohne eigene aktive Komponente dar. Im Unterschied hierzu zeigt der erfindungsgemäße Fahrzeugreifen aktive Stellglieder, die durch die Aktuatoren gebildet werden.
Dies führt zu völlig neuen Gestaltungsmöglichkeiten im Bereich der Fahrdynamik und damit einerseits zu einer Erhöhung des Fahrspaßes und andererseits zu einer weiteren Verbesserung der Sicherheit im Straßenverkehr sowie niedrigerem Kraftstoffverbrauch.

## Patentansprüche

1. Fahrzeugreifen mit wählbaren mechanischen Eigenschaften,
wobei der Fahrzeugreifen mit einem oder mehreren Aktuatoren zur Änderung der physikalischen Eigenschaften des Fahrzeugreifens versehen ist,
**dadurch gekennzeichnet,**
**dass** die Aktuatoren Nanostrukturteilchen aufweisen.

2. Fahrzeugreifen nach Anspruch 1,
**dadurch gekennzeichnet,**
**dass** die Aktuatoren als Folien ausgebildet sind.

3. Fahrzeugreifen nach Anspruch 1,
**dadurch gekennzeichnet**,
das es sich bei den Nanostrukturteilchen um Kohlenstoff-Nanostrukturteilchen handelt.

4. Fahrzeugreifen nach Anspruch 1 oder 3,
**dadurch gekennzeichnet,**
**dass** es sich bei den Nanostrukturteilchen um Fasern handelt.

5. Fahrzeugreifen nach Anspruch 4,
**dadurch gekennzeichnet,**
**dass** es sich bei den Fasern mindestens teilweise um Nanotubes handelt.

6. Fahrzeugreifen nach einem der Ansprüche 4 oder 5,
**dadurch gekennzeichnet,**
**dass** es sich bei den Fasern mindestens teilweise um Multi-Wall-Bucky-Fibers handelt.

7. Fahrzeugreifen nach einem der vorangehenden Ansprüche,
**dadurch gekennzeichnet,**
**dass** die Aktuatoren in das Material des Fahrzeugreifens integriert sind.

8. Fahrzeugreifen nach einem der vorangehenden Ansprüche 1-6,
**dadurch gekennzeichnet,**
**dass** die Aktuatoren in ein vom Material des Fahrzeugreifens verschiedenes Material integriert sind.

9. Fahrzeugreifen nach einem der vorangehenden Ansprüche,
**dadurch gekennzeichnet,**
**dass** die Aktuatoren schichtweise in einer Lamellenstruktur angeordet sind.

10. Fahrzeugreifen nach einem der vorangehenden Ansprüche,
**dadurch gekennzeichnet,**
**dass** die Form des Fahrzeugreifens wählbar ist.

11. Fahrzeugreifen nach einem der vorangehenden Ansprüche,
**dadurch gekennzeichnet,**
**dass** die Elastizität des Fahrzeugreifens wählbar ist.

12. Fahrzeugreifen nach einem der vorangehenden Ansprüche,
**dadurch gekennzeichnet,**
**dass** die Aktuatoren mit einer insbesondere in den Reifen integrierten Steuereinheit verbunden sind, die die Aktuatoren anhand von Sensordaten oder Benutzereingaben ansteuert.

## Claims

1. Vehicle tyre with selectable mechanical properties, the vehicle tyre being provided with one or more actuators for altering the physical properties of the vehicle tyre, **characterized in that** the actuators have nanostructure particles.

2. Vehicle tyre according to Claim 1, **characterized in that** the actuators are in the form of films.

3. Vehicle tyre according to Claim 1, **characterized in that** the nanostructure particles are carbon nanostructure particles.

4. Vehicle tyre according to Claim 1 or 3, **characterized in that** the nanostructure particles are fibres.

5. Vehicle tyre according to Claim 4, **characterized in that** the fibres are, at least partially, nanotubes.

6. Vehicle tyre according to one of Claims 4 or 5, **characterized in that** the fibres are, at least partially, Multi-Wall-Bucky-Fibres.

7. Vehicle tyre according to one of the preceding claims, **characterized in that** the actuators are incorporated into the material of the vehicle tyre.

8. Vehicle tyre according to one of the preceding Claims 1-6, **characterized in that** the actuators are incorporated into a material that is different from the material of the vehicle tyre.

9. Vehicle tyre according to one of the preceding claims, **characterized in that** the actuators are arranged in layers in a lamellar structure.

10. Vehicle tyre according to one of the preceding claims, **characterized in that** the shape of the vehicle tyre is selectable.

11. Vehicle tyre according to one of the preceding claims, **characterized in that** the elasticity of the vehicle tyre is selectable.

12. Vehicle tyre according to one of the preceding claims, **characterized in that** the actuators are connected to a control unit, which is in particular incorporated in the tyre, and which controls the actuators on the basis of data from sensors or user inputs.

## Revendications

1. Pneumatique pour véhicule possédant des propriétés mécaniques sélectionnables, le pneumatique pour véhicule étant muni d'un ou de plusieurs actionneurs pour modifier les propriétés physiques du pneumatique pour véhicule, **caractérisé en ce que** les actionneurs présentent des particules à nanostructures.

2. Pneumatique pour véhicule selon la revendication 1, **caractérisé en ce que** les actionneurs sont réalisés sous la forme de membranes.

3. Pneumatique pour véhicule selon la revendication 1, **caractérisé en ce que** les particules à nanostructures sont des particules à nanostructures en carbone.

4. Pneumatique pour véhicule selon la revendication 1 ou 3, **caractérisé en ce que** les particules à nanostructures sont des fibres.

5. Pneumatique pour véhicule selon la revendication 4, **caractérisé en ce que** les fibres sont au moins partiellement des nanotubes.

6. Pneumatique pour véhicule selon l'une des revendications 4 ou 5, **caractérisé en ce que** les fibres sont au moins partiellement des fibres de nanotubes à parois multiples.

7. Pneumatique pour véhicule selon l'une des revendications précédentes, **caractérisé en ce que** les actionneurs sont intégrés dans le matériau du pneumatique pour véhicule.

8. Pneumatique pour véhicule selon l'une des revendications précédentes 1 à 6, **caractérisé en ce que** les actionneurs sont intégrés dans un matériau différent du matériau du pneumatique pour véhicule.

9. Pneumatique pour véhicule selon l'une des revendications précédentes, **caractérisé en ce que** les actionneurs sont disposés en couches dans une structure à lamelles.

10. Pneumatique pour véhicule selon l'une des revendications précédentes, **caractérisé en ce que** la forme du pneumatique pour véhicule est sélectionnable.

11. Pneumatique pour véhicule selon l'une des revendications précédentes, **caractérisé en ce que** l'élasticité du pneumatique pour véhicule est sélectionnable.

12. Pneumatique pour véhicule selon l'une des revendications précédentes, **caractérisé en ce que** les actionneurs sont reliés avec une unité de commande, notamment intégrée dans le pneumatique, qui commande les actionneurs au moyen de données de capteur ou de saisie d'utilisateur.
